Europäisches Patentamt

**European Patent Office**

Office européen des brevets

(11) Veröffentlichungsnummer: **0 074 489**

**A1**

(12) **EUROPÄISCHE PATENTANMELDUNG**

(21) Anmeldenummer: **82107103.2**

(22) Anmeldetag: **06.08.82**

(51) Int. Cl.³: **A 01 B 1/06**
**A 01 B 33/02**

(30) Priorität: **11.09.81 DE 3136143**

(43) Veröffentlichungstag der Anmeldung:
**23.03.83 Patentblatt 83/12**

(84) Benannte Vertragsstaaten:
**AT BE CH DE FR GB IT LI LU NL SE**

(71) Anmelder: **GARDENA Kress + Kastner GmbH**
**Lichternseestrasse 40 Postfach 27 47**
**D-7900 Ulm (Donau)(DE)**

(72) Erfinder: **Kress, Werner**
**Kugelbergweg 5**
**D-7900 Ulm-Lehr(DE)**

(72) Erfinder: **Lopic, Franz**
**Sperberweg 10**
**D-7911 Nersingen(DE)**

(72) Erfinder: **Katzer, Johann**
**Nebelhornweg 9**
**D-7910 Neu-Ulm(DE)**

(72) Erfinder: **Stephany, Christian**
**Biberacher Strasse 76**
**D-7900 Ulm (Donau)(DE)**

(72) Erfinder: **Sauer, Roland**
**Gersterstrasse 41**
**D-7900 Ulm-Göggling(DE)**

(74) Vertreter: **Patentanwälte Ruff und Beier**
**Neckarstrasse 50**
**D-7000 Stuttgart 1(DE)**

(54) Arbeitsgerät, insbesondere Haus- und Gartengerät, mit einem Antriebsmotor.

(57) An ein Haus- oder Gartengerät, das einen Rahmen (13) in Form eines Fahrgestells und eine daran ankuppelbar angetriebene Vorrichtung (12) besitzt, sind verschiedene Motorentypen ankuppelbar, und zwar sowohl Elektromotoren (15) als auch Brennkraftmaschinen, beispielsweise ein kleiner Benzinmotor (14). An dem Gestell (13) sind Bedienungselemente (30) in einem Handgriff (28) vorgesehen, die über einen Bowdenzug (33) mit einem Anschlußflansch (19) in Verbindung stehen. An diesem befindet sich eine Kupplungseinrichtung, die sowohl den Elektro- als auch den Benzinmotor in gleicher Weise betätigt.

Der Führungshandgriff (28) enthält zwei Hebel (31, 32), von denen der längere (31) zum Handgriff hin auf Anschlag gezogen werden kann. Diese Stellung ist als Normalleistungs- bzw. Drehzahleinstellung des Motors einstellbar. Über den kleinen Hebel (32) kann eine darüber hinausgehende Leistung bzw. Drehzahl gewählt werden.

FIG.1

EP 0 074 489 A1

0074489

9. September 1981 JB/kh

Anmelder:  GARDENA
Kress + Kastner GmbH
Lichternseestr. 40
7900 Ulm/Donau

Unser Zeichen:  A 19 774 EP

Arbeitsgerät, insbesondere Haus- und
Gartengerät mit einem Antriebsmotor

Die Erfindung betrifft ein Arbeitsgerät, insbesondere
Haus- und Gartengerät, mit einem Antriebsmotor und einem
mit einer angetriebenen Vorrichtung verbundenen Rahmen,
wobei der Antriebsmotor über eine an einem Anschlußteil
vorgesehene Schnellkupplung anschließbar ist und das
Anschlußteil eine Kupplungseinrichtung für am Rahmen
angeordnete Bedienungselemente des Motors enthält.

Derartige Arbeitsgeräte sind in vielfacher Ausführung
bekannt. Es zählen dazu u.a. Rasenmäher, Bodenbearbeitungsgeräte, wie Fräsen und Motorhacken, Schneidgeräte,
Motorsägen, Heckenscheren, Sprühgeräte, Saug-, Pump- und
Blaseinrichtungen, Schneeräumgeräte und Außenbord-Bootsmotoren. Der Rahmen kann dabei in unterschiedlichster Weise ausgebildet sein und teilweise auch eine Einheit mit der angetriebenen Vorrichtung bilden, beispielsweise bei Pumpen, Rasenmähern oder Sprühgeräten, während bei anderen Vorrichtungen, wie der im folgenden noch beschriebenen, ein ausgepägter Rahmen mit einem Antriebsschaft zwischen die angetriebene Vorrichtung und den Motor eingefügt ist.

Es ist bei derartigen Arbeitsgeräten bekannt, an einen Motor unterschiedlichste Arbeitsgeräte über die Schnellkupplung anzuschließen. Es ist dabei jedoch schwierig, den Motor auch in der bequemsten und sichersten Weise zu bedienen, weil dazu die Bedienungselemente, wie beispielsweise die Gasbetätigung eines Benzinmotors, am Motor meist nicht sehr griffgünstig ist. Es ist daher schon vorgeschlagen worden, eine Kupplungseinrichtung für die Bedienungselemente vorzusehen, die am gleichen Anschlußteil vorgesehen ist, an dem auch die Schnellkupplung für den Halt und den Drehantrieb des Motors angebracht ist.

Aufgabe der Erfindung ist es, ein Arbeitsgerätesystem mit unterschiedlichen ankuppelbaren, angetriebenen Vorrichtungen noch universeller zu machen und dabei das Baukastenprinzip beizubehalten.

Diese Aufgabe wird gemäß der Erfindung dadurch gelöst, daß die Bedienungselemente bei wahlweiser Verwendung eines Verbrennungs- oder Elektromotors über die Kupplungseinrichtung wahlweise mit der Gasbetätigung des Verbrennungsmotors und einem Betriebsschalter bzw. -regler am Elektromotor verbindbar sind.

Nunmehr können nicht nur an den gleichen Motor oder die gleiche Motorart unterschiedliche Arbeitsvorrichtungen angekuppelt werden, sondern es ist auch möglich,
wahlweise Elektro- oder Verbrennungsmotoren zu verwenden, je nachdem, ob ein Stromanschluß zur Verfügung
steht oder nicht. Dabei wird über die Kupplungseinrichtung die mechanische Bewegung der Bedienungselemente
auf die ganz unterschiedlich funktionierenden, jedoch
auf den gleichen Bewegungsablauf angepaßten Regelorgane
der unterschiedlichen Motoren übertragen. Bei einer Verbrennungsmotor ist das die Betätigung der Gas- oder Drosselklappe bzw. eines Drehzahlreglers, die hier zusammengefaßt als Gasbetätigung bezeichnet wird, während beim
Elektromotor ein Schalter, vorzugsweise ein Schnappschalter (Mikroschalter) bzw. ein Drehzahlregler, beispielsweise ein elektronischer Regler verwendet wird.

Die Kupplungseinrichtung kann im wesentlichen in der
gleichen Ebene angeordnet sein wie die Schnellkupplung und wird mit dieser zusammen eingekuppelt bzw.
in die Kupplungsposition gebracht. Sie kann an dem
flanschartig ausgebildeten Anschlußteil und am Motor
in Form je eines Schwenkhebels mit ineinander eingreifenden Vorsprüngen und Ausnehmungen ausgebildet sein.
Diese Ausführung ist besonders leicht gegenseitig zu
positionieren und zu justieren. Es wäre aber auch möglich, über ein Schiebegestänge mit senkrecht zur Kupplungsebene verlaufender Bewegungsrichtung zu arbeiten.

Vorzugsweise kann eine mit der Schnellkupplung zusammenarbeitende Sicherungseinrichtung vorgesehen sein,
die die Inbetriebnahme des Motors bei nicht eingerasteter Schnellkupplung verhindert. Dies ist wichtig, um
eine Gefahr für die Bedienungsperson oder Schäden an
der Kupplung oder am Arbeitsgerät zu verhindern, wenn
der Motor angelassen wird, ohne daß die Kupplung vollständig eingerastet und gesichert ist. Die Sicherungseinrichtung kann bei einem Verbrennungsmotor einen Zündstromschalter betätigen, der beispielsweise mit dem manuell betätigbaren üblichen Zünfstromschalter in Reihe
geschaltet ist. Beim Elektromotor wäre ebenfalls die
Betätigung eines mit dem Betriebsschalter in Reihe
liegenden Unterbrechers möglich. Es kann jedoch vorzugsweise die Sicherungseinrichtung ein von der Schnellkupplung bewegbares Teil sein, das die Kupplungseinrichtung
außer Funktion setzt, beispielsweise blockiert. In diesem Falle merkt der Benutzer bereits an der Betätigung
des Bedienungselementes, daß hier eine bewußte Blockierung vorliegt und wird so auf den Grund für das Nichtanlaufen des Motors aufmerksam gemacht.

Dabei ist es besonders vorteilhaft, wenn die Kupplungseinrichtung eine mechanische Oberlastsicherung enthält,
die bei übermäßiger Betätigung der Bedienungselemente
die Kupplung unterbricht und vorzugsweise bei Entlastung
der Bedienungselemente wieder einkuppelt. Damit wird
sichergestellt, daß eine unerfahrene Bedienungsperson
nicht durch Gewaltanwendung an den Bedienungselementen
versucht, die Blockierung der Kupplungseinrichtung zu
überbrücken oder im Normalbetrieb die Bedienungselemente
über den Endanschlag hinaus zu betätigen.

Zur Erleichterung der Bedienung trägt es auch bei, wenn
die Bedienungselemente eine einstellbare, überfahrbare
Raststellung bei wenigstens einem Normalbetriebszustand
aufweisen. Da gerade bei Baukastensystemen mit unterschiedlichen Arbeitsgeräten die optimale Drehzahl bzw.
Leistung für jedes Arbeitsgerät unterschiedlich ist
und meist nicht bei der Höchstleistung bzw. -drehzahl
des Motors liegt, ist es üblicherweise nötig, während
der gesamten Arbeitszeit die Bedienungselemente in einer bestimmten Stellung zu halten, die nur ganz selten nach oben oder unten geändert zu werden braucht. Dies erfordert große Aufmerksamkeit von der Bedienungsperson und ermüdet die Bedienungshand. Wenn jedoch gemäß dem genannten vorteilhaften Merkmal die Bedienungselemente gegen einen Rastanschlag betätigt werden können, so kann die Hand fest zugreifen, was auch der Führung des Gerätes zugute kommt. Der Motor ist dann bis zur Normalleistung betätigt, die jedoch im Falle, daß höhere Leistung oder Drehzahl erforderlich ist, überfahren werden kann. Dies kann auf verschiedene Arten geschehen, beispielsweise bei einem Drehgriff durch Überfahren einer Federraste. Eine besonders vorteilhafte Ausführung sieht vor, daß zwei Hebel vorhanden sind, von denen der eine, insbesondere größere Hebel zur Betätigung der Leistungsregelung bis zur Normalleistung vorgesehen ist, während ein zusätzlicher kleiner Hebel vorhanden ist, der gezogen werden kann, um eine darüber hinausgehende Leistung freizusetzen. Die Bedienungsperson kann also den Handgriff mit dem großen Griffhebel mit der Hand fest umschließen, wenn Normallast benötigt wird, und kann beispielsweise mit dem Zeigefinger über den kleinen Hebel eine größere Leistung freisetzen, wenn dies erforderlich ist. Wichtig ist in allen Fällen, daß der Normalbetriebspunkt an dem jeweiligen Arbeitsgerät einstellbar ist, also nicht an den Motor, sondern die Bedürfnisse des einzelnen Arbeitsgerätes angepaßt werden kann.

Ferner ist vorteilhaft noch vorgesehen, daß die Bedienungselemente einen Schnellabstellknopf aufweisen, über den beispielsweise der Zündstromunterbrecher des Verbrennungsmotors betätigt wird. Um nicht eine zusätzliche elektrische Verbindung zu den Bedienungselementen zu benötigen, kann dies über die gleichen Bedienungselemente, die meist einen Bowdenzug enthalten, geschehen, indem der Bowdenzug über eine normale Endstellung hinaus betätigt wird.

Während ein Verbrennungsmotor von sich aus eine Sicherung gegen versehentliches Anlassen hat, weil einerseits der Zündstromschalter vorhanden ist und andererseits der Motor meist mechanisch über einen Rücklaufseilstarter gestartet werden muß, könnte beim Elektromotor eine versehentliche Betätigung der Bedienungselemente den Motor anlaufen lassen. Daher hat der Elektromotor vorzugsweise zusätzlich zu dem Betriebsschalter einen mit diesem in Reihe geschalteten Hauptschalter.

Weitere Vorteile und Merkmale der Erfindung gehen aus den Unteransprüchen und der Beschreibung im Zusammenhang mit den Zeichnungen hervor. Ein bevorzugtes Ausführungsbeispiel der Erfindung ist in den Zeichnungen dargestellt und wird im folgenden näher erläutert. Es zeigen:

Fig. 1    eine perspektivische Ansicht eines Arbeitsgerätes,

Fig. 2    ein Teilschnitt eines Antriebsmotors mit Antriebsschaft,

Fig. 3    eine Draufsicht auf die Hülse in Richtung des Pfeiles III-III in Fig. 2 gesehen, jedoch ohne die Spannschraube,

Fig. 4   eine Ansicht der Kupplungsseite eines
         Verbrennungsmotors, in Richtung der Pfeile
         IV-IV in Fig. 2 gesehen (in Fig. 2 ist
         jedoch ein Elektromotor gezeigt),

Fig. 5   eine Draufsicht auf die Kupplungsebene
         des Kupplungsteils in Richtung der Pfeile
         V-V in Fig. 2 gesehen,

Fig. 6   eine schematische Darstellung eines Details
         im Inneren des in Fig. 2 gezeigten Elektromotors,

Fig. 7   ein Detailschnitt nach der Linie VII-VII

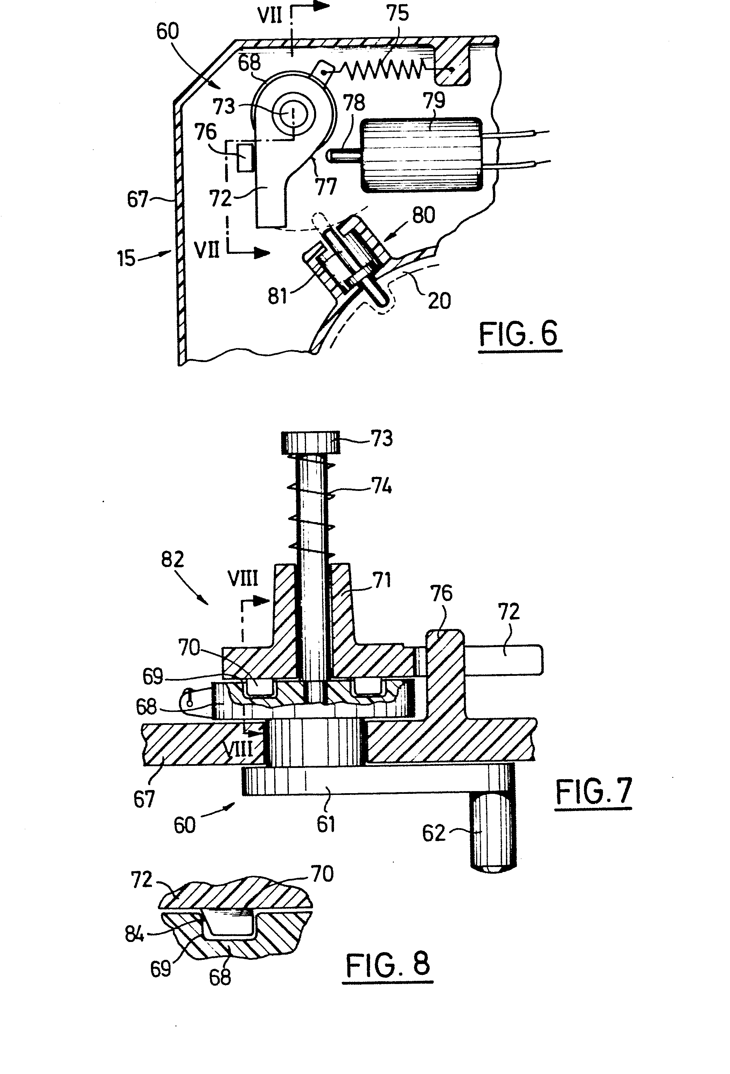

         in Fig. 6,

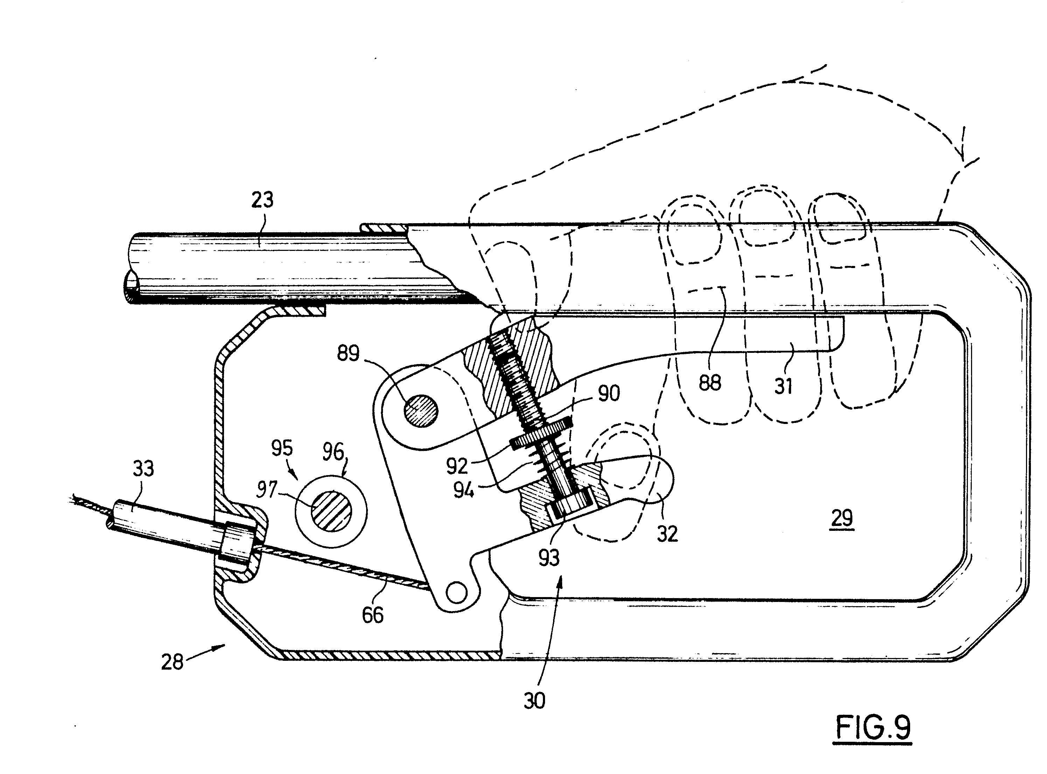

Fig. 8   ein Detail entsprechend der Schnittlinie
         VIII-VIII in Fig. 7, und

Fig. 9   eine teilgeschnittene Ansicht eines Bedienungshandgriffes.

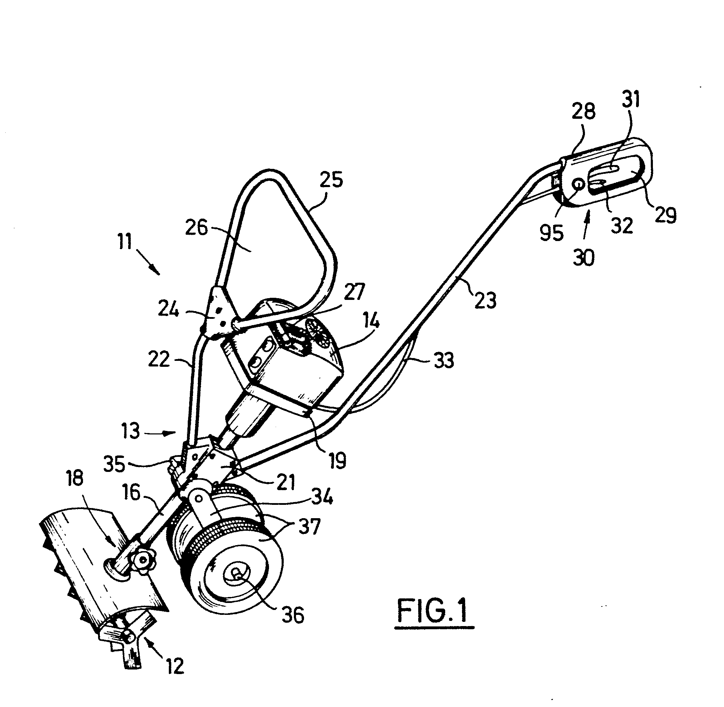

Das in Fig. 1 dargestellte Arbeitsgerät 11 besteht aus
einer angetriebenen Vorrichtung 12, die im vorliegenden
Beispiel eine Motor-Bodenhacke oder -Fräse ist, einem
Gestell oder Rahmen 13 und einem daran ankuppelbaren
Motor, im dargestellten Beispiel einem Verbrennungsmotor
14 in Form eines kompakten luftgekühlten Benzinmotors,
der einschließlich Tank, Vergaser, Zündanlage und Startvorrichtung in einem im wesentlichen kubischen Gehäuse
untergebracht ist.

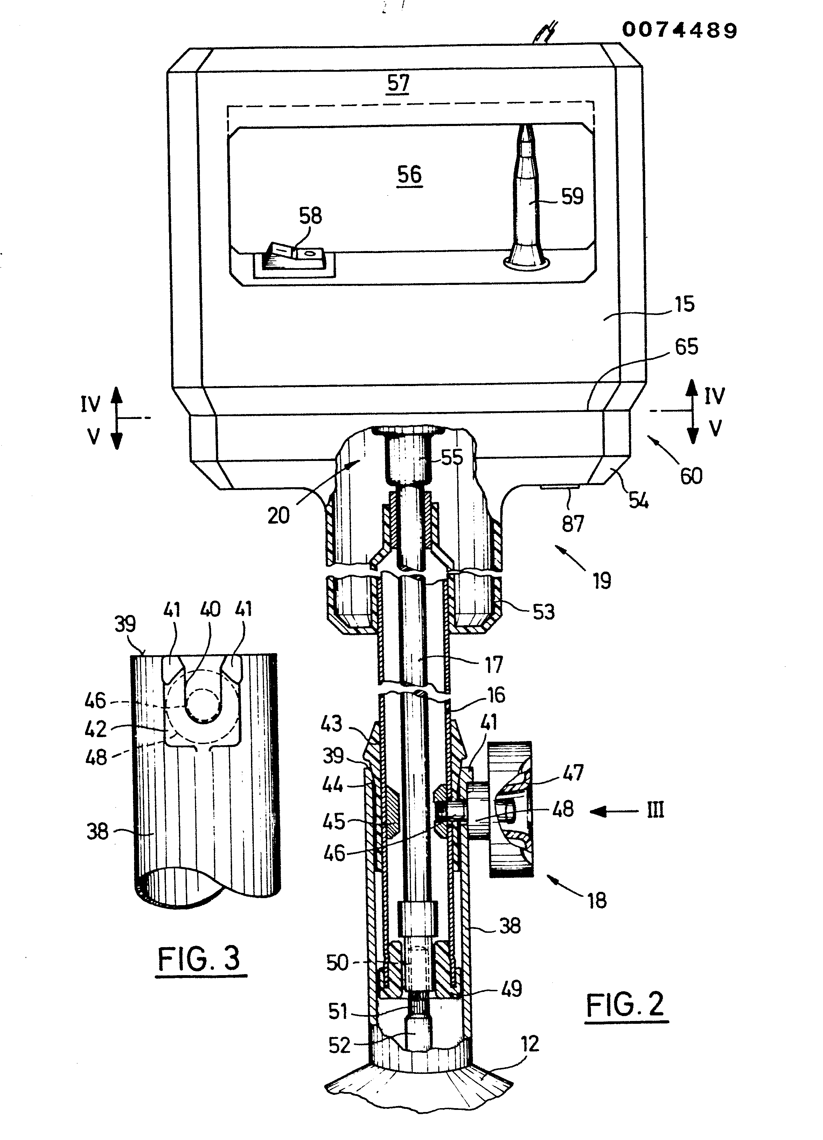

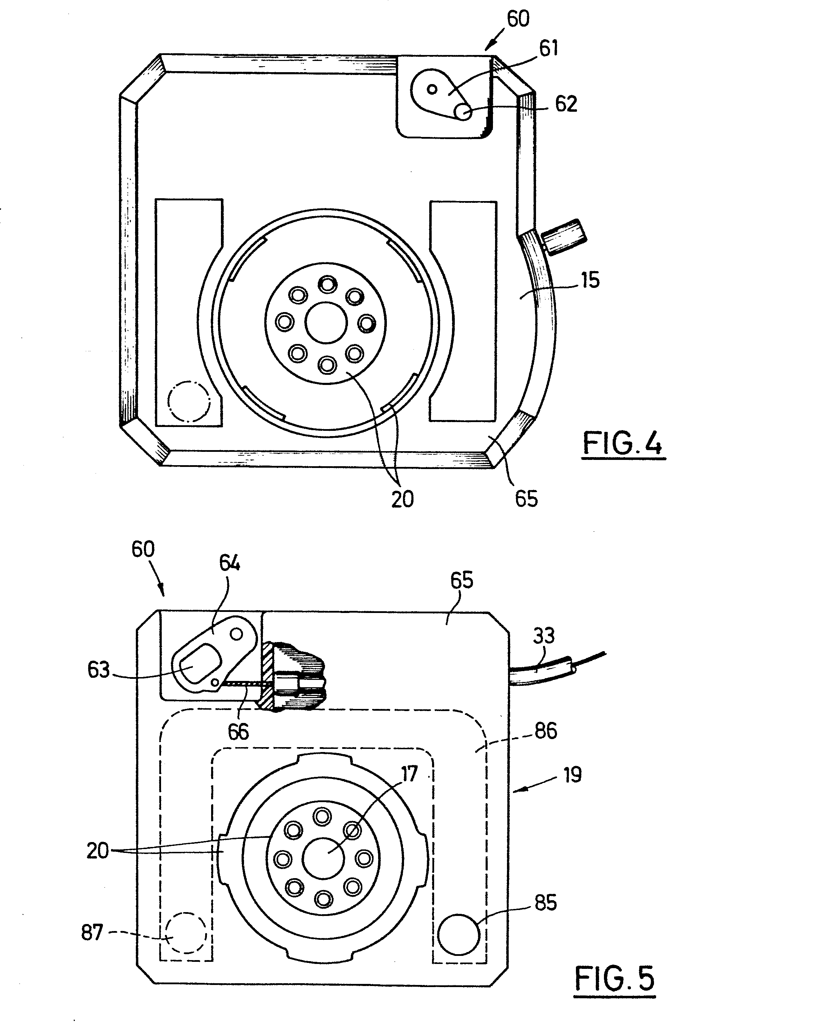

Das Gestell besitzt einen Antriebsschaft 16 in Form eines
Metallrohrs mit einer darin laufenden Antriebswelle 17 (Fig. 2) und besitzt an seinem unteren Ende eine Anschlußeinrichtung 18 für die angetriebene Vorrichtung 12 und
an seinem oberen Ende ein Anschlußteil 19 mit einem Teil
einer Schnellkupplung 20 (Fig. 4 und 5), die von beliebiger Bauart sein kann und mit der das Motorgehäuse mechanisch mit dem Antriebsschaft fest verbunden wird und
gleichzeitig die Motorwelle, ggf. über eine Fliehkraftkupplung, mit der Abtriebswelle des Motors drehfest verbunden wird. Es kann sich dabei um eine Bajonett-Kupplung
oder ähnliche bekannte Schnellkupplungen handeln und die
Welle kann durch eine Klauenkupplung angeschlossen sein.

Aus Fig. 1 ist zu erkennen, daß im Mittelbereich des Antriebsschaftes 16 ein Verbindungsstück 21 angebracht ist,
durch das der Antriebsschaft hindurchragt und das an zwei
einander gegenüberliegenden Seiten die Enden zweier Rohre
22, 23 aufnimmt, die unter einem Winkel von ca. 45° von
dem Verbindungsstück abzweigen. Das in Fig. 1 und in der
dargestellten schrägen Arbeitsposition des Arbeitsgerätes
11 obere Rohr 22 ist kürzer als das untere Rohr 23 und
endet in einem über ein weiteres Verbindungsstück 24 angeschlossenen bügelförmigen Traggriff 25, der eine dreiecksförmige Gestalt mit einer mittleren Durchgriffsöffnung 26 hat, durch die der Motor 14 und insbesondere
dessen Starter 27 gut zugänglich ist.

Das untere Rohr 23 verläuft nach einem Knick, ebenso wie
der Traggriff 25, im wesentlichen parallel zum Antriebsschaft und ragt wesentlich, d.h. mehr als die Länge
des Antriebsschaftes, über das Anschlußteil bzw. den
Motor 14 hinaus und endet nach einer Abwinkelung in Richtung auf die Horizontale (in Arbeitsposition) in einem
Führungshandgriff 28, der eine rahmenförmige Gestalt
mit einer mittleren Durchgriffsöffnung 29 hat, in der
zwei zu den Bedienungselementen 30 für den Motor gehörende Hebel 31, 32 griffgünstig angeordnet sind. Die Hebel sind über ein flexibles Verbindungselement (Bowdenzug) 33 mit dem Anschlußteil 19 verbunden.

Der Traggriff 25 und der Führungshandgriff 28 mit ihren Rohren 22, 23 haben also mit dem Antriebsschaft 16 zusammen eine etwa Y-förmige Gestalt, bei der jedoch in der Mitte des Y der Antriebsschaft hochragt und der Motor liegt. Die beiden Schenkel des Y sind ungleich lang.

Das dargestellte Arbeitsgerät ist dazu bestimmt, mit seiner angetriebenen Vorrichtung 12 im Erdbodenbereich zu arbeiten. Dies gilt auch für andere angetriebene Vorrichtungen, die mit diesem Arbeitsgerät verbunden werden können, wie beispielsweise Schneidgeräte. Die dargestellte Arbeitsposition des Gerätes 11 ist daher so schräg, daß der etwas über den Motor hinausreichende Handgriff 25 etwa vertikal über dem Motor liegt und dort mit einer (z.B. der linken) Hand gehalten werden kann, während die andere (rechte) Hand am Führungshandgriff 28 angreift und das Arbeitsgerät steuert und bedient. Über den Traggriff 25 kann das Gerät so getragen werden, daß es frei arbeitet, oder es kann angehoben werden.

Im dargestellten Beispiel ist an dem Verbindungsstück 21 eine Doppelschwinge 34 angelenkt, die nach Lösen einer Klemmschraube 35 durch Schwenken verstellbar ist. Am unteren Ende der Schwinge 34 sind an einer Achse 36 zwei Stützräder 37 gelagert, die zwischen einer Position etwa unterhalb dem Motor 14 und einer in Richtung auf die angetriebene Vorrichtung 12 etwas davorliegenden Position verstellbar sind. Die Stützräder nehmen bei einer Vorrichtung, die in einer bestimmten Höhe über oder unter dem Erdboden arbeitet, das Gewicht des Arbeitsgerätes auf, so daß die Bedienungsperson beim normalen Arbeiten dies nicht über den Traggriff 25 tragen muß. Sollten die
Verhältnisse dies notwendig machen, so können die Stützräder 37 hochgeschwenkt oder auch entfernt werden.

In Fig. 2 ist der Antriebsschaft 16 mit der Anschlußeinrichtung 18 für die angetriebene Vorrichtung 12 und das
Anschlußteil 19 für den Motor, in diesem Falle ein Elektromotor 15, gezeigt. Die Anschlußeinrichtung 18 besitzt
an der auswechselbaren angetriebenen Vorrichtung 12 eine
rohrförmige Hülse 38, die an ihrem freien Ende 39 eine
einseitig offene, langlochförmige Einbuchtung 40 mit abgeschrägten Ecken hat (Fig. 3). Zu ihren beiden Seiten
sind im Bereich des Endes 39 Vorsprünge 41 vorgesehen,
die über die im übrigen im Bereich der Einbuchtung 40
im wesentlichen plane Sitzfläche 42 am Äußeren der Hülse
vorstehen.

Die antriebsschaftseitige Hälfte der Anschlußeinrichtung
18 hat in einigem Abstand vom unteren Ende des Antriebsschaftes eine außen aufgesteckte Kunststoffhülse 43 mit
einer konischen Fläche 44. Im Bereich der Kunststoffhülse
43 ist ins Innere des Antriebsschaftes 16 eine Metallhülse 45 eingepreßt. Durch die Kunststoffhülse 43, den
rohrförmigen Antriebsschaft 16 und die Metallhülse 45
reicht ein Stehbolzen 46 hindurch, der in die Metallhülse eingeschraubt ist und die übrigen Teile darauf
festlegt. An seinem äußeren Ende trägt er ebenfalls
ein Gewinde, auf das eine Spannmutter 47 unverlierbar
aufgeschraubt ist. Die Spannmutter hat an ihrem dem Antriebsschaft zugekehrten Ende einen zylindrischen Bund
48, mit dem die Hülse 38 der angetriebenen Vorrichtung
12 festgespannt werden kann. Zum Anschließen wird die
Hülse 38 über eine auf das Ende des Antriebsschaftes 16
aufgesetzte Kappe 49 mit einer mittleren Führung für die
Antriebswelle 17 und die Kunststoffhülse 43 geschoben,

A 19 774 EP

0074489

wobei sie sich auf der konischen Fläche 44 weitgehend
zentriert. Dabei greift der Stehbolzen 46 in die Einbuchtung 40 ein und der Bund 48 (beides in Fig. 3 strichliert dargestellt) liegt auf der Sitzfläche 42 der Hülse
38 auf und drückt die Hülse 38 kraftschlüssig gegen die
Kunststoffhülse 43. Dabei greift die Umfangsfläche des
Bundes 48 hinter die beiden Vorsprünge 41 und legt den
Anschluß damit in axialer Richtung auch formschlüssig
fest. Bei gelöster Spannmutter 47 laufen die Vorsprünge
41 unter dem Bund 48 hindurch.

Die Antriebswelle ist an ihrem unteren Abtriebsende mit
einer aufgesetzten metallischen Hülse versehen, die eine
Innen-Keilverzahnung 50 (strichliert dargestellt) besitzt.
In diese greift eine Keilverzahnung 51 an der Antriebswelle 52 der angetriebenen Vorrichtung 12 ein. Durch entsprechende Schrägen führen sich die Keilverzahnungen beim
Kuppeln selbst ineinander. Die Antriebswelle 52 treibt
über entsprechende Getriebe die Arbeitsvorrichtungen an.
Die Antriebswelle 17 ist in der Kunststoffkappe 49 nur
so relativ lose geführt, daß beim Ankuppeln die beiden
Verzahnungen gut ineinander eingreifen. Danach sorgt die
Keilverzahnung selbst für eine Führung der relativ kurzen Antriebswelle 17, so daß keine aufwendige Zwischenlagerung der Antriebswelle am unteren Ende des Antriebsschaftes 16 notwendig ist.

Das Anschlußteil 19 besteht aus einem Kunststoffgehäuse,
das einen Schaftteil 53 hat, der am oberen Ende des Antriebsschaftes 16 befestigt ist und einen flanschartig
ausgebildeten Teil 54, der, ebenso wie die daran anzuschließenden Motoren 14, 15 in einer im wesentlichen
quadratischen ebenen Kupplungsfläche oder Kupplungsebene
65 endet. Im Inneren des Anschlußteils 19 ist die Antriebswelle 17 gelagert und ist an ihrem oberen Ende mit einem Kupplungsstück 55 verbunden, beispielsweise
einer Kupplungsklaue mit mehreren kranzförmig angeordneten Stiften, die in entsprechende Ausnehmungen an dem
anderen Teil der im Motor angeordneten Schnellkupplung
20 eingreifen können.

Das Gehäuse des Elektromotors hat auf einer Seite eine
Ausnehmung 56, die im Bereich der Endfläche des Motors
von einem Steg 57 überbrückt ist, an dem der Motor insbesondere beim Montieren angefaßt und getragen werden
kann. Im Bereich der Ausnehmung 56 liegt auch ein elektrischer Hauptschalter 58 mit einer Funktionsleuchte
und der Ausgang des Stromanschlußkabels 59.

Wie aus den Fig. 2 und 4, 5 zu erkennen ist, ist im Bereich der Kupplungsebene 65 an einer Ecke eine Kupplungseinrichtung 60 für die Bedienungselemente des Motors angeordnet. Sie besitzt am Motor 15 einen Schwenkhebel 61
mit einem kurbelartig davon abgehenden Zapfen oder Vorsprung 62, der in eine entsprechende Ausnehmung 63 eines
Schwenkhebels 64 am Anschlußteil 19 paßt. Der Schwenkhebel 64 ist mit der Seele 66 des Bowdenzuges 33 verbunden und wird von diesem verschwenkt. Durch entsprechende Anschläge sind die beiden Schwenkhebel so festgelegt, daß sie in der unbetätigten Ausgangsstellung
beim Ankuppeln der Schnellkupplung 20 automatisch ineinander eingreifen, so daß eine Verschwenkung des Hebels
64 den Hebel 61 entsprechend mit verschwenkt.

Der Schwenkhebel 61 am Motor 15 ist in dem Motorgehäuse
67 schwenkbar gelagert (Fig. 7) und trägt auf der Innenseite einen Flansch 68, der an seiner nach innen gerichteten Stirnfläche Ausnehmungen 69 hat (s. auch Fig. 8).
In diese Ausnehmungen greifen entsprechende Vorsprünge 70 an der dem Flansch 68 zugekehrten Stirnfläche einer
Nabe 71 eines Betätigungshebels 72 ein, deren eine Seite,
ebenso wie die entsprechende Begrenzung der Ausnehmung
69,in Umfangsrichtung etwas abgeschrägt ist. Die Nabe
71 des Betätigungshebels 72 ist auf einem Bolzen 73 konzentrisch zum Schwenkhebel 61 und gegen die Kraft einer
Druckfeder 74 axial verschiebbar gelagert. Der Betätigungshebel 72 wird in unbetätigtem Zustand von einer
Zugfeder 75 gegen einen Gehäuseanschlag 76 angelegt. Der
Betätigungshebel 72 hat eine leicht kurvenförmige Betätigungsfläche 77, mit der er bei seiner Verschwenkung
entgegen dem Uhrzeigersinn auf den Betätigungsknopf 78
eines als Schnappschalter (Mikroschalter) ausgebildeten
Betriebsschalters 79 einwirkt, um diesen einzuschalten.

In Fig. 6 ist ferner eine Sicherungseinrichtung 80 dargestellt, die aus einem im wesentlichen radial zur Motorwelle geführten Stift 81 besteht, der unter Federkraft
in Richtung auf die Schnellkupplung 20 belastet ist. Dieser Stift arbeitet mit einem Teil der Schnellkupplung
so zusammen, daß er nur bei sicher eingerasteter Schnellkupplung in der in Fig. 6 dargestellten Lage ist, in der
das Ende des Betätigungshebels 72 frei an ihm vorbeischwenken kann. In allen anderen Lagen wird er von einem
Teil der Schnellkupplung in die Bahn des Betätigungshebels
72 gedrückt (strichliert gezeichnet), so daß er eine
Schenkung des Betätigungshebels weitgehend verhindert,
zumindest so weit behindert, daß der Betriebsschalter 79
nicht mehr betätigt wird. Um die Kupplungseinrichtung 60
und den Betriebsschalter gegen Beschädigung zu schützen,
wenn z. B. bei blockiertem Betätigungshebel 72 oder auch
am Endanschlag des Betriebsschalters die Bedienungselemente 30 zu stark betätigt werden, ist die in Fig. 7 dargestellte Überlastsicherung 82 vorgesehen. In diesem Falle gleiten die beiden Schrägflächen 84 an der Ausnehmung 69 und dem Vorsprung aufeinander ab und der Betätigungshebel 72 wird gegen die Kraft der Feder 74 so weit von dem Flansch 68 abgehoben, daß der Vorsprung 70 nunmehr auf der Stirnfläche des Flansches 68 gleitet und die Kupplung zwischen den Schwenkhebel 61 und dem Betätigungshebel 72 außer Funktion ist. Sowie die übermäßige Betätigung nachläßt, zieht die am Flansch 68 angreifende Zugfeder 75 den Schwenkhebel 61 wieder in die Ausgangslage, wobei der Betätigungshebel 72 durch Reibung mitgenommen und an den Anschlag 76 angelegt wird, bis Vorsprünge und Ausnehmungen 69, 70 wieder übereinander liegen und ineinander einrasten.

In den Fig. 2 und 4 ist ein Elektromotor 15 dargestellt, der an das Arbeitsgerät angekuppelt ist und über die Kupplungseinrichtung 60 von den am Gestell 13 angeordneten Bedienungselementen 30 betätigt wird. Mit den gleichen Bedienungselementen und über die Kupplungseinrichtung 60 wird auch die in Fig. 1 dargestellte Brennkraftmaschine 14 bedient. Dort ist in gleicher Weise wie in Fig. 4 dargestellt ein Schwenkhebel mit einem Vorsprung vorgesehen, der die Drosselklappe bzw. den Drehzahlregler des Verbrennungsmotors betätigt. Auf diese Weise wird also ein Arbeitsgerät geschaffen, an das nicht nur unterschiedliche angetriebene Vorrichtungen, sondern auch unterschiedliche Motorenarten angeschlossen werden können, ohne daß andere Betätigungselemente notwendig wären oder der Benutzer sich in irgendeiner Weise bei der Bedienung umzustellen hätte. Bei der Brennkraftmaschine ist der Auspuffstutzen an einer Stelle angeordnet, die diagonal gegenüberliegend von der Kupplungseinrichtung 60 liegt und in Fig. 4 (obwohl dort ein Elektromotor dargestellt ist) mit einem strichpunktierten Kreis angedeutet ist. An der entsprechenden Stelle ist in der Kupplungsebene 65 am Anschlußteil 19 ein Aufnahmestutzen 85 vorgesehen, der entweder gerade durch den flanschartigen Teil des Anschlußteils 19 hindurchragt oder, wie die in Fig. 5 mit strichlierten Linien angedeutet ist, in eine im Anschlußteil 19 angeordnete U-förmige Schalldämpferkammer 86 führt, die schließlich über einen in Fig. 2 nach unten gerichteten Auspuffstutzen 87 mit dem Freien verbunden ist. Auf diese Weise wird der ohnehin vorhandene Raum am Arbeitsgerät zur besonders guten Schalldämpfung des Motors genutzt.

In Fig. 9 ist der Führungshandgriff 28 mit den Bedienungselementen 30 detailliert dargestellt. In der Durchgriffsöffnung 29 des Handgriffes sind die beiden Hebel 31 und 32 so angeordnet, daß der längere Hebel 31 in seiner betätigten Stellung an der Innenfläche des oberen Rahmenteils 88 anliegt, das zusammen mit dem Hebel 31 von der Hand des Bedienenden umschlossen wird. Der Hebel 31 ist im Handgriff 28 um eine Achse 89 schwenkbar, auf der auch der kleine Hebel 32 schwenkbar gelagert ist. An diesem ist das Ende der Seele 66 des Bowdenzuges 33 angebracht, so daß der Bowdenzug von dem kleinen Hebel betätigt wird. Die Hebel 31, 32 sind auf der Achse 89 unabhängig voneinander gelagert, jedoch über einen Bolzen 90 miteinander verbunden, der in ein Gewinde 91 im Hebel 31 eingeschraubt und in der Einschraublänge über einen gerändelten Bund 92 des Bolzens 90 einstellbar ist. Der Bolzen 90 geht durch den Hebel 32 hindurch, ist mit diesem jedoch auf Zug über einen Kopf 93 des Bolzens verbunden. Eine Druckfeder 94 drückt die Hebel 31, 32 so weit auseinander, wie dies durch die Einstellung des Bolzens im Gewinde 51 bestimmt ist.

Wenn der Bedienende z.B. einen angekuppelten Verbrennungsmotor 14 gestartet hat und zu arbeiten beginnt, umfaßt er den Hebel 31 mit der Hand und zieht ihn ganz an das Rahmenteil 88 heran, so daß er den Führungshandgriff sicher führen kann und seine Hand nicht durch das Einhalten einer Zwischenstellung ermüdet wird. Dabei kann er über den Bund 92 die für das jeweilige Arbeitsgerät benötigte Motorleistung oder -drehzahl einstellen, die zum normalen Arbeiten ausreicht. Der große Hebel 31 verschwenkt dabei über den Bolzen 90 den kleinen Hebel 32 und betätigt den Bowdenzug. Wenn eine größere Leistung und Drehzahl erforderlich ist, beispielsweise wenn eine Bodenbearbeitungsvorrichtung auf eine besonders harte Erdscholle kommt, kann der Bedienende mit dem Zeigefinger den kleinen Hebel 32 ergreifen und diesen heranziehen, wobei die Feder 94 zusammengedrückt wird und der Bowdenzug weiter als bei der Normalstellung betätigt wird. Wird der kleine Hebel 31 wieder losgelassen, so kehrt der Motor wieder zu seiner normalen Betriebsleistung zurück.

Für den Betrieb des beispielsweise dargestellten Elektromotors 15 mit nur einer Drehzahl bzw. Leistung ist der Hebel 32 nicht notwendig. Bei einem in Drehzahl und Leistung regelbaren Elektromotor, beispielsweise über einen elektronischen Drehzahlregler, der an Stelle des Betriebsschalters 79 angebracht ist, ist jedoch die Wirkung der Bedienungselemente die gleiche wie bei dem entsprechenden Verbrennungsmotor. Vorzugsweise sind die Motoren dann so eingestellt, daß ihre Regler bzw. Gasbetätigungen jeweils einer gleichen Leistung bzw. Drehzahl entsprechen. In diesem Falle kann unabhängig von der Art des angekuppelten Motors die Normallast-Einstellung der Bedienungselemente 30 gleich bleiben.

Am Führungshandgriff 28 ist ein Schnellstoppknopf 95 vorgesehen, der auf einem von einer Seitenfläche des Handgriffes aus betätigbaren Druckknopf besteht, der einen Schaft 96 hat, an dessen Außenumfang im unbetätigten Zustand der Hebel 32 anliegt. In dieser Stellung ist ein Benzinmotor in seiner Leerlaufstellung. Beim Drücken des Schnellstopknopfes 95 kann der Hebel 32 in eine durch einen abgesetzten Schaftteil 97 gebildete Nut einfallen, was der Aus-Stellung des Motors entspricht. Zur Sicherheit trägt es auch bei, daß der Betriebsschalter 79 des Elektromotors 15 mit dem Hauptschalter 58 in Reihe geschaltet ist, so daß der Elektromotor (ohnehin nur in angekuppeltem Zustand) über die Bedienungselemente 30 nur dann in Betrieb gesetzt werden kann, wenn zusätzlich der Hauptschalter eingeschaltet ist.

Die vorteilhafte Ausbildung als Baukastensystem erstreckt sich auch auf die Zusammensetzung des Rahmens. So kann beispielsweise unter Verwendung des Antriebsschaftes 16 und des Verbindungsstückes 21 auch eine Ausführung hergestellt werden, bei der zwei gabelförmig nebeneinander angeordnete Handgriffe oder ein Bügel mit dem um 90° auf dem Antriebsschaft gedrehten Verbindungsstück 21 angebracht sind.

_/1_

9. September 1981 JB/kh

Anmelderin: GARDENA
Kress + Kastner GmbH
Lichterseestr. 40
7900 Ulm (Donau)

Unser Zeichen: A 19 774 EP

Arbeitsgerät, insbesondere Haus- und
Gartengerät mit einem Antriebsmotor

--------------------

A n s p r ü c h e

1. Arbeitsgerät, insbesondere Haus- und Gartengerät mit
einem Antriebsmotor und einem mit einer angetriebenen
Vorrichtung (12) verbundenen Rahmen (13), wobei der
Motor (14, 15) über eine an einem Anschlußteil (19)
vorgesehene Schnellkupplung (20) anschließbar ist
und das Anschlußteil (19) eine Kupplungseinrichtung
(60) für am Rahmen (13) angeordnete Bedienungselemente (30) für den Motor (14, 15) enthält, dadurch
gekennzeichnet, daß die Bedienungselemente (30) bei
wahlweiser Verwendung eines Verbrennungs- oder Elektromotors (14, 15) über die Kupplungseinrichtung (60)
wahlweise mit der Gasbetätigung des Verbrennungsmotors (14) und einem Be_triebsschalter (79) bzw. -Regler
am Elektromotor (15) verbindbar sind.

2. Arbeitsgerät nach Anspruch 1, dadurch gekennzeichnet, daß
   die Kupplungseinrichtung (60) im wesentlichen in der gleichen Ebene (65) angeordnet ist wie die Schnellkupplung (20).

3. Arbeitsgerät nach Anspruch 1 oder 2, dadurch gekennzeichnet, daß die Kupplungseinrichtung (60) an den flanschartig
   ausgebildeten Anschlußteil (19) und am Motor (14, 15) in
   Form je eines Schwenkhebels (61, 64) mit ineinander eingreifenden Vorsprüngen (62) und Ausnehmungen (63) ausgebildet ist.

4. Arbeitsgerät nach einem der vorhergehenden Ansprüche, dadurch gekennzeichnet, daß eine mit der Schnellkupplung (20)
   zusammenarbeitende Sicherungseinrichtung (80) vorgesehen
   ist, die die Inbetriebnahme des Motors (14, 15) bei nicht
   eingerasteter Schnellkupplung (20) verhindert, die vorzugsweise ein von der Schnellkupplung (20) bewegbares Teil (81)
   ist, das die Kupplungseinrichtung (60) außer Funktion setzt,
   und/oder ggf. einen Zündstromschalter des Verbrennungsmotors (14) betätigt.

5. Arbeitsgerät nach einem der vorhergehenden Ansprüche, dadurch gekennzeichnet, daß die Kupplungseinrichtung (60)
   am Elektromotor (15) über einen schwenkbaren Betätigungshebel (72) auf den Betriebsschalter (69) bzw. den Regler
   einwirkt.

6. Arbeitsgerät nach einem der vorhergehenden Ansprüche, dadurch gekennzeichnet, daß die Kupplungseinrichtung (60)
   eine mechanische Oberlastsicherung (82) enthält, die bei
   übermäßiger Betätigung der Bedienungselemente (30) die
   Kupplung unterbricht und vorzugsweise bei Entlasung der
   Bedienungselemente (30) wieder einkuppelt und die vorzugsweise ineinander eingreifende, ggf. abgeschrägte Vorsprünge (70) und Ausnehmungen (69) enthält, die an zwei
einander zugekehrten Stirnflächen von konzentrisch gelagerten, axial gegeneinander verschiebbaren und unter
Federkraft gegeneinander gedrückten Teilen (68, 71) der
Kupplungseinrichtung (60) vorgesehen sind.

7. Arbeitsgerät nach einem der vorhergehenden Ansprüche, dadurch gekennzeichnet, daß die Bedienungselemente (30)
eine einstellbare, überfahrbare Raststellung bei wenigstens
einem Normalbetriebszustand aufweisen und vorzugsweise zwei
federbelastete Greifhebel (31, 32) enthalten, wobei die betätigte Stellung des einen Greifhebels (31) auf einen Normalbetriebszustand einstellbar ist und der andere Greifhebel (32) vorzugsweise mit größerer Betätigungskraft eine
höhere Leistungseinstellung des Motors (14, 15) bewirkt,
daß insbesondere die beiden Hebel (31, 32) über ein in einer
Richtung federbelastetes Verbindungsteil (90) miteinander
verbunden sind und daß vorzugsweise der für die Normallast vorgesehene Greifhebel (31) länger und nahe an einem
von der Hand der Bedienungsperson umschließbaren Handgriffteil (88) des Arbeitsgerätes (11) angeordnet ist und der
andere Greifhebel (32) kürzer und weiter von dem Handgriffteil (88) entfernt ist.

8. Arbeitsgerät nach einem der vorhergehenden Ansprüche, dadurch gekennzeichnet, daß der Elektromotor (15) zusätzlich
zu dem Betriebsschalter (79) einen mit diesem in Reihe
geschalteten Hauptschalter (58) aufweist.

9. Arbeitsgerät nach einem der vorhergehenden Ansprüche, dadurch gekennzeichnet, daß die angetriebene Vorrichtung (12)
am unteren Ende eines Antriebsschaftes (16) über eine Anschlußeinrichtung (18) angeschlossen ist, die eine den Antrieb übertragende Wellenkupplung, vorzugsweise in Form in-

A 19 774 EP                - 4 -

einander steckbarer Keilverzahnungen (50, 51), und einen
Schaftanschluß zur mechanischen Verbindung der angetriebenen Vorrichtung (12) mit dem Rahmen (13), aufweist,
der vorzugsweise aus einer über ein Rohrende des Antriebsschaftes (16) steckbaren Hülse (38) besteht, die an ihrem
Ende (39) eine Einbuchtung (40) hat, in die ein am Antriebsschaft angebrachter Bolzen (46) eingreift, an dem
eine Spannschraube (47) vorgesehen ist, die gegen die
Hülse (38) im Bereich der Einbuchtung (40) fest spannbar ist, wobei sie zur Axialsicherung hinter Vorsprünge
(41) an der Hülse (38) greift.

10. Arbeitsgerät nach einem der vorhergehenden Ansprüche, dadurch gekennzeichnet, daß in dem Anschlußteil ein Schalldämpfer (86) für einen als Brennkraftmaschine ausgebildeten Motor angeordnet ist.

0074489

FIG.1

0074489

FIG. 3

FIG. 2

FIG.4

FIG.5

FIG. 6

FIG. 7

FIG. 8

FIG.9

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| A | US – A – 4 213 504 (F.A. SCHNEIDER) <br> * abstract; fig. 1, 6 * <br> -- | 1,9 | A 01 B 1/06 <br> A 01 B 33/02 |
| A | DE – A – 1 800 229 (T. KLEINE) <br> * Seite 2, Zeile 11 bis Seite 4, <br> Zeile 20; Fig. 1 * <br> -- | 1,9 | |
| A | FR – A – 1 196 512 (S.E.M.I.A.C.) <br> * Seite 2, Spalte 1, letzter Absatz <br> bis Spalte 2, letzter Absatz; <br> Fig. 1 bis 4 * <br> -- | 1,9 | **RECHERCHIERTE SACHGEBIETE (Int. Cl.³)** |
| A | US – A – 3 773 112 (E. ZINCK) <br> * Spalte 3, Zeilen 27 bis 43; Fig. 1 <br> bis 3 * <br> -- | 1 | A 01 B 1/00 <br> A 01 B 33/00 <br> A 01 D 53/00 <br> B 26 B 25/00 |
| A | GB – A – 2 052 934 (J. ADAMCZYK et al.) <br> -- | | |
| A | GB – A – 1 467 252 (BIRNAM PRODUCTS LTD.) <br><br> ---- | | |

**KATEGORIE DER GENANNTEN DOKUMENTE**

X: von besonderer Bedeutung allein betrachtet
Y: von besonderer Bedeutung in Verbindung mit einer anderen Veroffentlichung derselben Kategorie
A: technologischer Hintergrund
O: nichtschriftliche Offenbarung
P: Zwischenliteratur
T: der Erfindung zugrunde liegende Theorien oder Grundsatze
E: alteres Patentdokument, das jedoch erst am oder nach dem Anmeldedatum veroffentlicht worden ist
D: in der Anmeldung angefuhrtes Dokument
L: aus andern Grunden angefuhrtes Dokument
&: Mitglied der gleichen Patentfamilie, ubereinstimmendes Dokument

Der vorliegende Recherchenbericht wurde fur alle Patentanspruche erstellt.

| Recherchenort | Abschlußdatum der Recherche | Prufer |
|---|---|---|
| Berlin | 12-11-1982 | SCHOFER |

EPA form 1503.1  06.78